# EUROPÄISCHE PATENTSCHRIFT

(11) **EP 0 919 273 B1**
(45) Veröffentlichungstag und Bekanntmachung des Hinweises auf die Patenterteilung: **07.03.2001**
(21) Anmeldenummer: 98121246.7
(22) Anmeldetag: 07.11.1998
(51) Int. Cl.: B01D 47/10

(54) **Venturibaugruppe für einen Venturiwäscher**
Multiple-venturi assembly for a venturi scrubber
Ensemble de plusieurs venturis pour un laveur venturi

(30) Priorität: 26.11.1997 DE 19752244
(43) Veröffentlichungstag der Anmeldung: 02.06.1999
(73) Patentinhaber: Lockwood Greene Petersen GmbH, 65036 Wiesbaden (DE)
(72) Erfinder: Lehmann, Klaus, 65527 Niedernhausen (DE)
(74) Vertreter: Carstens, Wilhelm, Dipl.-Phys.

(56) Entgegenhaltungen:
- DE-C- 4 314 788

## Beschreibung

Die Erfindung betrifft zunächst eine Venturibaugruppe zur Reinigung eines Gases mit einer Flüssigkeit bestehend aus einer Venturibaueinheit mit einer Vielzahl von in einem Block angeordneter Venturis und einer mit Abstand von der Venturibaueinheit angeordneten und mittig auf die Anströmseite der Venturibaueinheit ausgerichteten Düse für die Zufuhr von Waschflüssigkeit.

Eine solche Baugruppe ist aus der DE 43 14 788 C1 bekannt. Bei dieser Baugruppe sind die Venturi der Venturibaueinheit in dem Block parallel nebeneinander angeordnet. Bei dieser Ausgestaltung der Venturibaugruppe erfolgt keine gleichmäßige Beaufschlagung aller Venturi-Eintrittskehlen mit Waschflüssigkeit.

Es ist daher die Aufgabe der vorliegenden Erfindung, eine gattungsgemäße Venturibaugruppe zu schaffen, bei der die Beaufschlagung der in einem Block angeordneten Venturi verbessert wird.

Diese Aufgabe wird dadurch gelöst, daß der Block als Kugelteilschale ausgebildet ist und die Venturi in der Kugelteilschale radial auf den Mittelpunkt der Kugelteilschale ausgerichtet ausgebildet sind und daß der im Mittelpunkt der Kugelteilschale im wesentlichen in der Mitte der Austrittsöffnung der Düse angeordnet ist.

Durch die radiale Anordnung der Multiventuri in dem Kugelteilschalenblock und die Anordnung der Düse im Mittelpunkt der Kugel werden alle Venturi-Eintrittskehlen im wesentlichen mit der gleichen Flüssigkeitsmenge beaufschlagt. Durch die zu allen Venturi-Eintrittskehlen gleichen Abstände der Düsenaustrittsöffnung ist auch eine gleichmäßige Tropfengeschwindigkeit gewährleistet. Das Verhältnis der Gasgeschwindigkeit zur Tropfengeschwindigkeit ist wesentlich für die Optimierung der Abscheidung.

Durch die radiale Anordnung der Venturi ergibt sich auf der Abströmseite, d. h. der Außenseite der Kugelteilschale, im Vergleich zur ebenen Oberfläche der bekannten Blockmultiventuri, daß zwischen den kreisförmigen Austrittsöffnungen der Venturi-Austrittskehlen ein Steg größerer Breite vorhanden ist und sich damit eine wesentliche Reduzierung der Gasgeschwindigkeit beim Austritt aus der Venturi-Austrittskehle ergibt. Weiterhin erweitert die radiale Waschwasserverteilung auf der Austrittsseite des erfindungsgemäßen Multiventuriblockes die für eine Absorption verfügbare Oberfläche.

Vorzugsweise sind die radial angeordneten Venturi in dem Kugelteilschalenblock so angeordnet, daß sich eine Hexagonal-Packung ergibt.

Die Erfindung richtet sich auch auf eine Verwendung der Venturibaugruppe nach Anspruch 1 oder 2 in einem Venturiwäscher mit einem Waschbehälter und mindestens einer sich quer durch den Waschbehälter ertreckenden Tragplatte mit mindestens einer Durchlaßöffnung, die von der Venturibaueinheit der Venturibaugruppe überdeckt ist.

Vorzugsweise ist dabei eine an sich bekannte Verschraubung der Venturibaueinheit mit der Tragplatte so ausgebildet, daß die Schraubbolzen im Blockinneren angeordnet sind.

Die Erfindung soll nun anhand der beigefügten Figuren näher beschrieben werden. Es zeigt:
- Fig. 1: einen Radialschnitt durch eine Ausführungsform der erfindungsgemäßen Venturibaugruppe,
- Fig. 2: einen Teilschnitt durch eine Venturibaueinheit nach Fig. 1 zur Erläuterung der Geometrie auf der Abströmseite der Baueinheit und
- Fig. 3: eine Seitenaufsicht in Blickrichtung des Pfeils II in Fig. 1.

Die Venturibaugruppe besteht aus einer Venturibaueinheit 1 und einer Düse 2 zur Beaufschlagung der Venturibauheit mit Waschflüssigkeit.

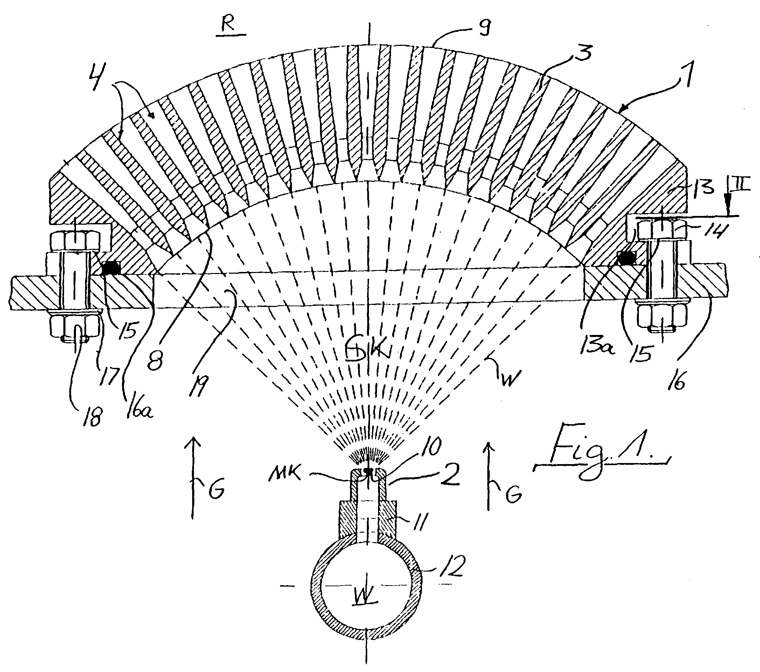

Die Venturibauheit weist einen Block 3 auf, der beispielsweise entsprechend den Verfahren gemäß der DE 43 14 788 C1 mit einer Vielzahl von Venturis 4 versehen ist. Jeder Venturi besteht aus einer kürzeren Eintrittskehle 5, einem zylindrischen Zwischenstück 6 und einer längeren Austrittskehle 7. Die Eintrittsöffnungen der Eintrittskehlen liegen auf einer Teilkugelfläche 8 und die Austrittsöffnungen der Austrittskehlen 7 liegen auf einer zur Kugelteilfläche 8 konzentrischen Kugelteilfläche 9 mit größerem Radius. Der Mittelpunkt der beiden Kugelteilflächen 8 und 9 ist in der Fig. 1 mit MK bezeichnet. Die Mittelachsen der Venturi 3 sind im wesentlichen radial auf den Mittelpunkt MK ausgerichtet.

Der Mittelpunkt MK liegt im wesentlichen in der Mitte der Austrittsöffnung 10 der Düse 2. Die Düse 2 ist in einen Stutzen 11 eingeschraubt, der mit einem Zuführungsrohr 12 für eine Waschflüssigkeit W verschweißt ist.

Außer der Waschflüssigkeit tritt von unten in die Venturibaueinheit 1 noch das zu reinigende Gas ein, wie dies in der Fig. 1 durch die Pfeile G schematisch dargestellt ist.

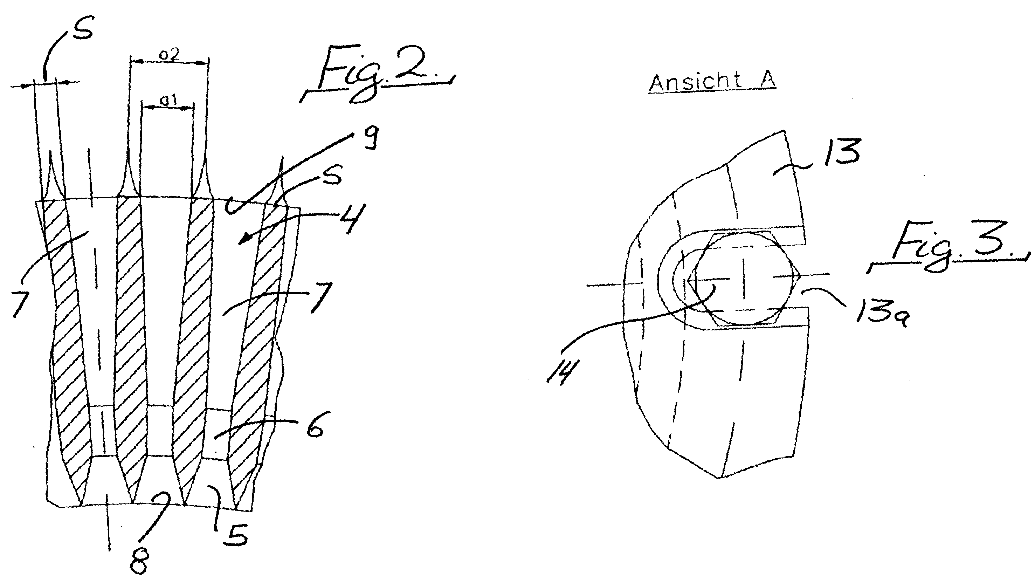

Die Venturibaueinheit 1 weist an den Rändern der kreisförmig begrenzten Flächen 8 und 9 einen umlaufenden Befestigungsabschnitt 13 auf, so daß der Block als Kugelteilschale ausgebildet ist. In U-förmig gestufte Aufnahmeöffnungen 13a des Befestigungsabschnitts 13 können, wie aus den Fig. 1 und 3 ersichtlich, von der Seite her Schraubbolzen 14 mit Unterlegscheiben 15 derart eingeführt werden, daß die Venturibauheit 1 mit einer sich quer durch einen nicht gezeigten Waschbehälter erstreckenden Tragplatte 16 unter Einschaltung einer Dichtung 16a verschraubt werden können, indem auf das untere Ende des Schraubbolzens eine Unterlegscheibe 17 und eine Mutter 18 aufgebracht werden. Die Schraubbolzen sind somit im Blockinneren angeordnet. In der Tragplatte ist eine Durchlaßöffnung 19 ausgebildet, deren Durchmesser dem Durchmesser der Kugelteilfläche 8 entspricht, so daß der aus der Düsenöffnung 10 austretende Sprühkegel SK der Waschflüssigkeit W ungehindert in die Eintrittsöffnungen der Eintrittskehlen 5 eintreten kann.

Alle Eintrittskehlen 5 haben den gleichen Abstand von der Düsenaustrittsöffnung 10 und alle Venturis 2 sind radial auf diese Öffnung ausgerichtet. Somit werden die Venturi mit gleichen Flüssigkeitsmengen an Waschflüssigkeit beaufschlagt. Außerdem ist eine gleichmäßige Tropfengeschwindigkeitsverteilung über die Venturieintrittskehlen gegeben.

Wie die Fig. 2 zeigt, kommt es -im Gegensatz zu der Ausbildung der Venturis gemäß der DE 43 14 788 C1- auf der Abströmfläche 9 zur Ausbildung eines Steges vorgegebener Breite S zwischen den Austrittsöffnungen der Austrittskehlen 7. Wenn der Durchmesser der Austrittskehle 7 mit a1 und der Abstand von Mitte eines Steges S zur Mitte des benachbarten Steges S mit a2 bezeichnet wird, erfolgt am Übergang von a1 nach a2 durch die plötzliche Erweiterung des Querschnittes ein als Sprungdiffusion genannter Effekt auf, wobei der Carnot'sche Stoßverlust kleiner ist als der Austrittsverlust.

Im Bereich der durch das Vorhandensein des Steges auftretenden Sprungdiffusion und der anschließenden Quervermischungen der Gas-Wasser-Teilströme kommt es zusätzlich zu Agglomerationseffekten über das Spektrum der Aerosolpartikel, was zu einer Verbesserung des Gesamtabscheidegrads führt. Durch die radiale Waschwasserverteilung über den Reingasraum R oberhalb der Tragplatte im Waschbehälter kommt es zu einer Vergrößerung der für die Absorption verfügbaren Oberfläche.

## Patentansprüche

1. Venturibaugruppe zur Reinigung eines Gases mit einer Flüssigkeit bestehend aus einer Venturibaueinheit mit einer Vielzahl von in einem Block angeordneten Venturis und einer mit Abstand von der Venturibaueinheit angeordneten und mittig auf die Anströmseite der Venturibaueinheit ausgerichteten Düse für die Zufuhr von Waschflüssigkeit,
**dadurch gekennzeichnet,** daß der Block (3) als
Kugelteilschale ausgebildet ist und die Venturi (4) in der Kugelteilschale (3) radial auf den Mittelpunkt (MK) der Kugelteilschale ausgerichtet ausgebildet sind und daß der Mittelpunkt (MK) der Kugelteilschale (3) im wesentlichen in der Mitte der Austrittsöffnung (10) der Düse (2) angeordnet ist.

2. Venturibaugruppe nach Anspruch 1,
**dadurch gekennzeichnet**, daß die radial angeordneten
Venturi in dem Kugelteilschalenblock (3) so angeordnet sind, daß sich eine Hexagonal-Packung ergibt.

3. Verwendung der Venturibaugruppe nach Anspruch 1 oder 2 in einem Venturiwäscher mit einem Waschbehälter und mindestens einer sich quer durch den Waschbehälter erstreckenden Tragplatte (16) mit mindestens einer Durchlaßöffnung (19), die von der Venturibaueinheit (3) der Venturibaugruppe (1) überdeckt ist.

4. Verwendung nach Anspruch 3,
**dadurch gekennzeichnet**, daß eine an sich bekannte
Verschraubung der Venturibaueinheit (1) mit der Tragplatte (16) so ausgebildet ist, daß die Schraubbolzen (14) im Blockinneren angeordnet sind.

## Claims

1. Venturi assembly for cleaning of a gas with a liquid comprising a venturi constructional unit with a plurality of venturis arranged in a block and a nozzle for the supply of washing liquid arranged in a distance from the constructional unit and directed in a centred manner towards the approach side of the constructional unit,
characterised in that the block (3) is formed as a sphere part shell and the
venturis (4) are formed in the sphere part shell, while being radially adjusted towards the centre point (MK) of the sphere part shell, and in that the centre point (MK) of the sphere part shell (3) is substantially arranged in the center of the orifice (10) of the nozzle (2).

2. Venturi assembly according to claim 1,
characterised in that the radially arranged venturis are arranged in the
sphere part shell block (3) in such a manner that a hexagonal package is provided.

3. Use of the venturi assembly according to claim 1 or 2 in a venturi washer having a washing container and at least one carrier plate (16) extending transversely through the washing container and having at least one passage opening (19), which is overlapped by the venturi constructional unit (3) of the venturi assembly (1).

4. Use according to claim 3,
characterised in that a known-per-se screwed connection of the venturi
assembly (1) with the carrier plate (16) is formed in such a manner that the screw bolts (14) are arranged in the interior of the block.

## Revendications

1. Module à venturis pour purifier un gaz avec un liquide, constitué par une unité de construction à venturis comportant une multiplicité de venturis disposés dans un bloc, et une buse qui est disposée à distance de l'unité de construction à venturis, qui est orientée vers le côté d'arrivée dans l'unité de construction à venturis et qui sert à amener un liquide de lavage,
caractérisé en ce que le bloc (3) est agencé sous la forme
d'une coque formée d'une partie de sphère et que les venturis (4) sont disposés dans la coque (3) formée d'une partie de sphère en étant orientés radialement vers le centre (MK) de la coque formée d'une partie de sphère, et que le centre (MK) de la coque (3) formée d'une partie de sphère est disposé essentiellement au centre de l'ouverture de sortie (10) de la buse (2).

2. Module à venturis selon la revendication 1,
caractérisé en ce que les venturis disposés radialement
sont disposés dans le bloc (3) de la coque formée d'une partie de sphère de telle sorte que l'on obtient un entassement hexagonal.

3. Utilisation d'un module à venturis selon la revendication 1 ou 2, dans un dispositif de lavage à venturis comportant un récipient de lavage et au moins une plaque de support (16), qui s'étend transversalement à travers le récipient de lavage et comporte au moins une ouverture de passage (19), qui est recouverte par l'unité de construction à venturis (3) du module à venturis.

4. Utilisation selon la revendication 3,
caractérisée en ce qu'un vissage connu en soi de l'unité de
construction à venturis (1) sur la plaque de support (16) est conçu de telle sorte que les boulons filetés (14) sont disposés à l'intérieur du bloc.
